# EUROPEAN PATENT SPECIFICATION

(11) **EP 3 767 918 B1**
(45) Date of publication and mention of the grant of the patent: **17.01.2024**
(21) Application number: 20185785.1
(22) Date of filing: 14.07.2020
(51) Int. Cl.: G06Q 20/38, G06Q 20/40, H04L 9/40, G06Q 20/04, H04W 12/06, H04W 12/47, H04L 67/306

(54) **METHOD AND SYSTEM FOR AUTHENTICATING A PURCHASE BY A USER**
VERFAHREN UND VORRICHTUNG ZUR AUTHENTIFIZIERUNG EINES ANKAUFS VON EINEM BENUTZER
MÉTHODE ET SYSTÈME D'AUTHENTIFICATION D'UN ACHAT PAR UN UTILISATEUR

(30) Priority: 15.07.2019 NL 2023507; 21.11.2019 NL 2024284
(43) Date of publication of application: 20.01.2021
(73) Proprietor: Siip Intellectual Property B.V., 8011 LD Zwolle (NL)
(72) Inventor: Voorhorst, Remco, 8011 XD Zwolle (NL)
(74) Representative: Laddé, Jurre Gerard

(56) References cited:
- WO-A1-2011/095216
- US-A1- 2005 251 408
- US-A1- 2018 181 964

## Description

The present invention relates to a method for authentication of a purchase by a user and a system therefor comprising a server.

Known in practice are purchase authentication systems, for instance a ticket system for events. The purchasing process using such a ticket system comprises of users purchasing tickets, wherein the tickets have a unique access code. This unique access code is also stored in a server. Upon entering an event, the access code is for instance scanned, after which it is verified whether the access code is valid. If the access code has already been used or is invalid, entry to the event will be denied. If the access code is valid, the user will be able to gain entry to the event.

US 2005/251408 A1 discloses a system and method for conducting intelligent multimedia marketing operations.

US 2018/181964 A1 discloses a method of authorizing a secure electronic payment from a payer to a payee.

WO 2011/095216 A1 discloses an improved identity management method.

A drawback of the known authentication systems is that tickets are resold on the black market at much higher prices than the original purchase price of the ticket, especially when an event is highly popular. This is detrimental to the consumer, who has to pay a higher ticket price. Alternatively or additionally, one person can buy up a large number of tickets and resell them at much higher prices than the original purchase price of the ticket. Another drawback is that it is possible for a person to resell a ticket multiple times, to different people, resulting in only the first person to arrive at the event and to have bought the ticket in question gaining entry. This makes the known ticket systems susceptible to fraud.

It is an object of the invention, among others, to obviate or at least reduce at least one of the above stated problems. It is a particular object of the invention to provide a method wherein the possibility to resell tickets is limited.

The object of the invention, among others, is achieved with a method according to claim 1.

An advantage of the method according to the invention is that a user datum can be added in simple manner in a first stage, which datum can be linked in a second stage to a more complex second user datum which is stored in a chip of an identity document. Because the first user datum is preferably relatively simple, it is easy for the user to create a profile in a first stage. The complexity of the first user datum is preferably lower than that of the second user datum. The first user datum need not be unique. Alternatively or additionally, it also has the advantage that a user can create a profile for multiple people, for instance acquaintances, in the first stage, as long as the first user data of these persons are known. It is not until the second stage that the second user datum is linked, with this being unique to a person.

By linking the identity document, which is unique and is always linked to one specific user, the method provides the option of using the identity document as for instance a ticket to an event. This has the advantage that reselling a ticket multiple times becomes impossible, since the admission ticket is the identity document, and this is unique. Alternatively or additionally, the chances of a ticket being resold at a much higher price than the purchase price are greatly reduced because the selling party must then lend his or her identity document to the purchasing party. This is enhanced by the fact that lending out an identity document is an offence. An alternative application of the present invention is the option of using an identity document to check in and/or make an attendance register at for instance a hotel. The advantage of this is that the identity of the people who have been present in the hotel can be stored in simple manner.

In a first stage a database is provided on a server, so that the obtained profile data comprising at least the one first user datum of the user can be stored in a profile in the database. The profile data of the user can for instance be entered by the user on a website or in an app, after which the profile data can be sent to the server. In an embodiment the server can comprise a processor configured to create a profile in the database on the server, which can be provided for this purpose with memory means for storing the data and storing the received profile data in the profile created for this purpose.

In a second stage a second user datum, which is shown on an identity document, is received on the server. The identity document is provided with a chip or other readable memory, which at least the first and second user datum is stored on and can be read from, or at least can be derived from. The identity document can for instance be a passport, identity card or driving licence. After a second user datum has been received on the server, it can be added to the profile associated with the first user datum.

It will be apparent to the skilled person that a plurality of profiles can be associated with one first user datum because the first user datum need not be unique. Every user however has their own profile with stored therein a first user datum obtained in the first stage and a second user datum obtained in the second stage.

In an alternative embodiment a representation of an identity document, on which is shown at least the one user datum which is stored in the profile of the user, is received on the server. This representation can for instance be sent to the server by the user. The representation can be an image, photo or scan of the identity document. The identity document shows at least the first user datum and the second user datum, or wherein the first and second user datum can at least be derived from the representation of the identity document.

It will be apparent to the skilled person that every document which shows a first user datum and second user datum and also comprises a chip from which the second user datum can be read can be used for the method according to the invention. In an alternative embodiment a bank card could for instance be used as identity document.

In an embodiment according to the invention the second stage further comprises of verifying whether the second user datum is associated with the first user datum.

Verifying whether the second user datum is associated with the first user datum ensures that the first and second user datum are associated with each other. Associated with each other is understood to mean that the first and second user datum are shown on one identity document and can be read from a chip on one identity document.

In an embodiment according to the invention the second stage further comprises of manually entering the second user datum on a mobile device.

Manually entering the second user datum can for instance be done in an application or on a web page on a mobile device.

In an embodiment according to the invention the second stage further comprises of extracting the first and second user datum from a representation of the identity document.

Extraction from a representation can for instance be done with a mobile device which is provided with a camera. The camera can be used to create in image of the identity document, which then forms the representation of the identity document. The mobile device can extract the first and second user datum from the representation of the identity document by means of Optical Character Recognition (OCR). At least the second user datum can then be transmitted to the server, where it is then added to the profile associated with the first user datum.

In an embodiment according to the invention the second stage further comprises of reading the first and second user datum from the chip of the identity document.

The first and second user datum can for instance be read from the chip, which is provided in or on the identity document, by means of an NFC reader on a mobile device. At least the second user datum can then be transmitted to the server, where it is subsequently added to the profile associated with the first user datum.

In all embodiments comprising a mobile device, the mobile device comprises a processor which is connected to the processor of the server, whereby the mobile device can send the second user datum to the server. The mobile device can also comprise memory means for for instance storing first and/or second user data.

In an embodiment according to the invention the step of verifying takes place prior to the second user datum being added to the profile, and the step of verifying further comprises of verifying whether the first user datum extracted or read from the identity document corresponds to the first user datum obtained from the user.

Because the first and second user datum are obtained during extraction and reading, it is possible to verify whether the first user datum obtained from the user in the first stage corresponds to the first user datum which is associated with the second user datum on the identity document. In an embodiment the second user datum is added to the profile associated with the first user datum if the first user datum obtained from the user corresponds to the first user datum which is extracted or read. In another embodiment the addition of the second user datum to the profile associated with the first user datum will be denied if the first user datum obtained from the user does not correspond to the first user datum which is extracted or read. Verifying before the second user datum is added to the profile ensures that the first and second user datum are shown and stored on the chip on one identity document. A database of verified first and second user data is hereby obtained.

In an embodiment according to the invention the first user datum comprises at least a date of birth of the user.

The date of birth as first user datum is a user datum that is easy to remember. Creating a profile for a user in the first step is hereby simplified. In addition, there are relatively few people with exactly the same date of birth, whereby the profile of the user is sufficiently unique. Because the date of birth must already be entered in a first stage upon creation of a profile, the profile can no longer be passed on to a random person. This has the advantage that a profile is for instance difficult to resell, which makes reselling almost impossible when an admission ticket is linked to the profile. A method for authentication of purchase of a user with a low susceptibility to fraud is thus obtained. After being provided by the user and stored the first time, the date of birth can preferably no longer be changed by the user him or herself. This prevents the date of birth being altered in the event that the admission ticket is resold.

In an embodiment according to the invention the method further comprises the step of associating a product, such as a ticket, with the profile, for instance by the user purchasing the product, wherein the second stage takes place after association of the product.

Associating a product enables a database to be built, which indicates which profiles and which products are associated, for instance which profiles are allowed entry to an event. This product could for instance also serve as proof that a purchase was made in an online shop. Because the second stage takes place after association of the product, only the first user datum of the user is needed for purchase. This increases the convenience of use of the method according to the invention, because the first user datum is a relatively simple datum, such as a date of birth. Alternatively or additionally, a user wishing to make a purchase for other persons can easily enter the first user datum of the persons in question. These persons in question can then later send the second user datum to the server themselves, after they have entered it manually or have extracted it by means of a representation and OCR or read it by means of an NFC reader. Alternatively, a representation of the identity document is sent to the server so that a second user datum can be added to their profile in the database in the second stage.

In an embodiment according to the invention the associating comprises of associating a unique product code with the relevant profile of the user in the database.

By associating a unique product code with the relevant profile a purchase of a determined product can for instance be associated with a determined profile. A user who has ordered a product can for instance have his or her identity document scanned at a collection point, after which it can be verified whether the user is actually the person who purchased the product. This greatly reduces fraud with the collection of products at pick-up points.

In an embodiment according to the invention the second user datum comprises a unique identification number.

Each identity document comprises a unique number, for instance the document number. Because the second user datum is a unique number, the second user datum can always only be associated with one profile in the database. The identity document, which is unique to each person, is hereby associated with the relevant profile in the database. This has the advantage that when a product is for instance purchased by a user and this product code is added to the relevant profile in the database, this product is also associated with the unique identity document. The identity document can hereby for instance serve as a ticket at an event or as proof of purchase of a product at a pick-up point. This prevents resale or selling on of tickets, since only a person's identity document is their admission ticket.

In an embodiment according to the invention the second user datum comprises at least one of the date of birth, the document number, the date of expiration and/or the citizen service number of the identity document.

Because the second user datum is at least one of the date of birth, the document number, the date of expiration and/or the citizen service number, data are provided for the purpose of verifying whether the identity document of the user in question is being used as admission ticket. The second user datum is preferably the document number or the citizen service number, since these are unique and can be linked to a user. The date of birth and the date of expiration are preferably additional verification data for authentication.

In an embodiment according to the invention the method further comprises of creating an authentication list on the basis of the product code of the profiles comprising at least the second user datum.

By creating an authentication list it is possible in simple manner to make an overview of the profiles that have purchased a determined product. An authentication list can for instance be made of all profiles that have a determined product code corresponding to a determined event. An overview of the profiles which may be admitted to an event can thus be made in simple manner on the basis of the product code.

In an embodiment according to the invention the profile data and the second user data in the database and/or the authentication list are hashed.

Hashing of the data ensures that the data, when obtained by an unauthorized entity, are anonymous and cannot be traced back to specific persons. This has the advantage that the data of for instance the identity documents are properly protected. The profile data and the second user data on the authentication list are preferably also hashed.

In an embodiment according to the invention the method further comprises of, using a scanner, reading at least the second user datum from the chip of the identity document, verifying whether the read second user datum occurs in the database, and sending an authentication signal if the second user datum occurs in the database.

The scanner can for instance comprise a processor which is connected to the server, whereby the scanner has access to the database with profiles. The connection can for instance comprise an Internet connection. The authentication signal can for instance be a signal which lights up the display of a scanner in green and/or prompts the scanner to emit a sound signal which indicates authentication and/or automatically opens gates.

Owing to such a method it can be verified in simple manner whether an identity document associated with the profile of a user is stored in the database. When the database for instance comprises every person who has purchased an admission ticket to an event, every person can hereby simply scan his or her identity document at the entrance of the event, after which an authentication signal is sent. An easy method for gaining entry to an event is hereby obtained, which simultaneously prevents fraud with or reselling at extortionate prices of admission tickets.

A further advantage is that an attendance register can be built with the profiles which are associated with the authentication signal. Every time an authentication signal is sent when the second user datum occurs in the database the profile associated with the second user datum is here added to an attendance register. In this way it is possible to verify who is actually present at an event. An alternative application for this method is that an attendance register can be made of people who have checked in at hotels. The advantage of the attendance register on the basis of the sent authentication signal is that, since the identity document of the person is used, it is ensured that this person is truly the one who is present at the event or checked in at the hotel.

The authenticity of the identity document is preferably verified by the scanner after the chip is read. Chips of many identity documents contain a digital signature. This digital signature, which is unique, is generated on the basis of the other data on the chip by the issuing authority. Owing to asymmetric cryptography, it can be verified in simple manner using the scanner whether it is a valid signature, but practically impossible to forge a valid signature. The authenticity of the identity document can be verified by reading the digital signature.

In an embodiment according to the invention the method further comprises of, using the scanner, reading the first user datum, verifying whether the read first user datum corresponds to the first user datum of the profile associated with the second user datum, and sending a denial signal if the read first user datum does not correspond to the first user datum of the profile associated with the second user datum.

Verifying whether the read first user datum corresponds to the first user datum of the profile associated with the second user datum ensures that the first user datum provided by the user corresponds to the user datum which is shown and stored on the identity document. This prevents a user who enters a date of birth in the first stage from purchasing a ticket and then reselling the ticket, after which a second user enters his or her second user datum of his or her identity document. In the above situation the first user datum provided by the first user and the first user datum read by the scanner do not correspond, whereby a denial signal can be sent. The advantage of this embodiment is that upon entering the event, it is always verified whether the person whom the ticket was intended for in the first stage was also the one trying to gain entry to the event.

In an embodiment according to the invention a denial signal is sent if the second user datum does not occur in the database.

The denial signal can for instance be a signal which lights up the display of a scanner in red and/or prompts the scanner to emit a sound signal which indicates a denial. Sending a denial signal if the second user datum does not occur in the database for instance makes it possible to deny a person entry to an event. The persons who have bought a valid admission ticket can thus be distinguished in simple manner from the persons who have not bought an admission ticket.

In an embodiment according to the invention the method further comprises the step of setting the scanner to a predetermined product code and verifying whether the preset product code is associated with the profile associated with the second user datum.

By setting the scanner to a predetermined product code the processor of the scanner can verify shortly after reading whether the read identity document is associated with a profile which is associated with a product code.

In an embodiment according to the invention the verification comprises of verifying whether the read second user datum occurs in the authentication list.

Using an authentication list enables the processor of the scanner to verify even more quickly whether the read identity document is associated with a determined product code. For this purpose the authentication list can have been sent to the scanner, which is provided for this purpose with suitable memory means. The method then preferably comprises the step of sending the authentication list, or otherwise making this list available, to the scanner.

In a further embodiment according to the invention the method further comprises the step of sending the authentication list to the scanner every determined unit of time.

Every determined unit of time is for instance every 5 seconds, or every minute. Sending the authentication list every determined unit of time enables users who have for instance made a purchase just before an event to be placed on the authentication list and to obtain entry to the event. It will be apparent to the skilled person that the processor of the scanner can also be in continuous connection with the authentication list or the database on the server.

In an embodiment according to the invention the method further comprises the step of storing a local back-up of the authentication list using the scanner.

By storing a local back-up it is possible, also when the connection between the processor of the scanner and the server is lost, to verify using the scanner whether at least the second user datum occurs in the database, is associated with a product code, or occurs in the authentication list. A more reliable method is hereby obtained, which can be performed under more conditions.

In an embodiment according to the invention the method further comprises the step of comparing the profiles in the authentication list to a second list of profiles, and when the profile on the list corresponds to profiles from the second list, a denial signal is generated. The method then further comprises the step of providing or receiving the second list.

The second list can for instance be a blacklist of banned persons, such as for instance terrorists or people banned from a stadium. By comparing the second list and generating a denial signal if the profiles correspond it is possible to prevent undesirable persons from gaining entry to the event. This increases safety when the method according to the invention is applied.

In an embodiment according to the invention the method further comprises of adding profiles which are associated with the second user datum and have already been read by the scanner to an attendance register and sending a denial signal if the second user datum read by the scanner occurs in the attendance register.

The advantage hereof is that this prevents that someone will try to gain entry a second time. When a person attempts to do this, a denial signal can be generated.

In an alternative embodiment the denial signal can also be generated when the read data of the identity document do not meet determined requirements. In an embodiment a denial signal is generated if the age of the visitor is lower than a predetermined age.

In an embodiment according to the invention the method further comprises the step of sending an admission signal using a mobile device which is related to the profile when the mobile device is located within a determined distance from the scanner.

It is for instance possible to have users install an app on their mobile phone, whereby a determined mobile phone is associated with a determined user. The admission signal is for instance sent when the mobile device associated with the profile which is also associated with a determined product code of an event is located within a 200-metre radius of the event through GPS localization. By sending an admission signal an additional verification is performed. It can hereby be ascertained with greater certainty that the person attempting to identify themselves with an identity document is truly the actual person associated with the profile.

In a further embodiment according to the invention the method further comprises of receiving on the server a third user datum which is stored in the chip of the identity document, and adding the third user datum to the profile associated with the first and second user datum.

The third user datum is preferably a datum which is unique to each user and is stored in chips of multiple types of identity document, for instance the citizen service number. Each of the identity documents of the user in question can hereby serve as admission ticket to the event. The advantage hereof is that it gives the user the option to gain entry to the event with multiple types of identity document. In all embodiments the third user datum can be read instead of the second user datum.

The invention further relates to a system comprising a server configured to perform the steps according to any one of the above described embodiments.

The system comprising the server has the same effects and advantages as described for the method according to the invention.

In an embodiment according to the invention the system further comprises a scanner configured to perform the steps as according to any one of the above described embodiments.

The scanner has the same effects and advantages as described for the method according to the invention.

Further features, advantages and details of the invention are described on the basis of preferred embodiments thereof, wherein reference is made to the accompanying drawings, in which:
- Figures 1A-B show examples of a system according to the invention;
- Figure 2 shows a first example of a method according to the invention; and
- Figure 3 shows a second example of a method according to the invention.

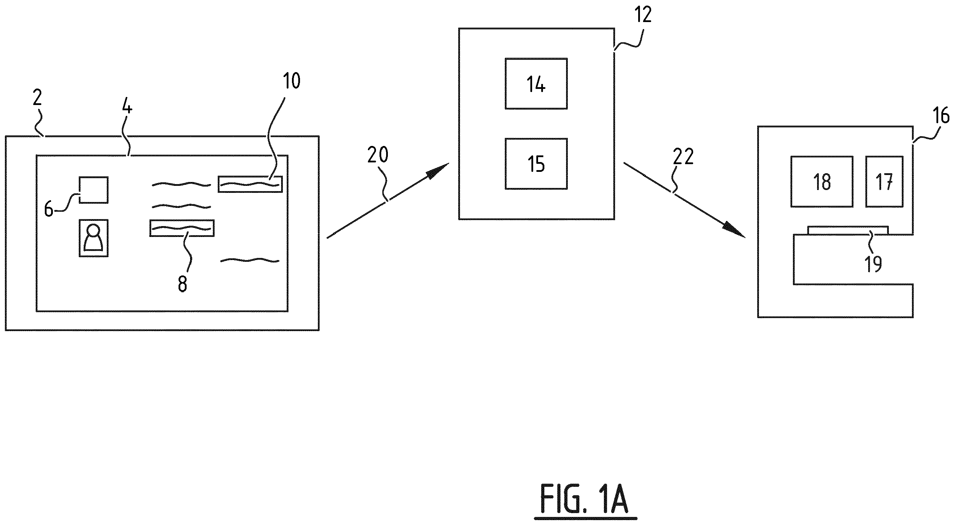

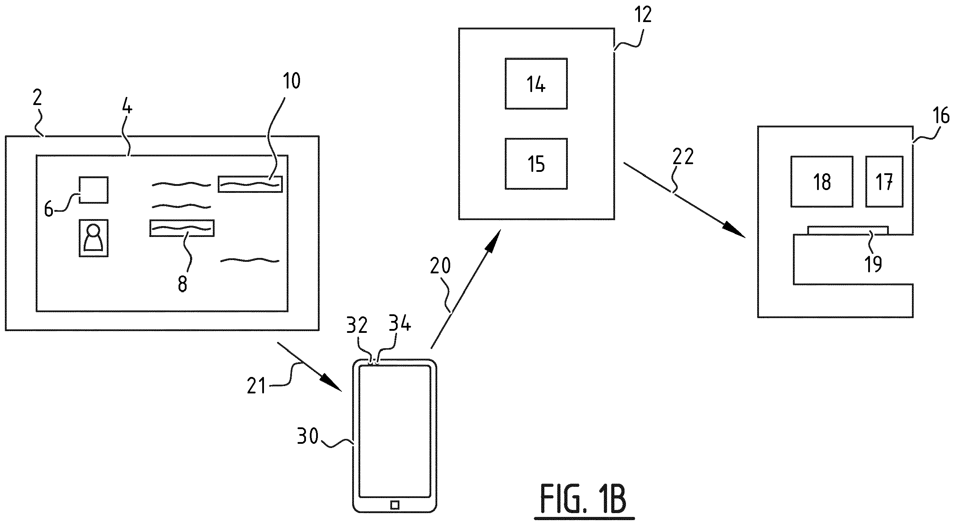

Representation 2 (figure 1A) of identity document 4 shows at least first user datum 8, in this example the date of birth, and second user datum 10, in this example the document number. Identity document 4 further comprises chip 6 where at least the date of birth and the document number, i.e. the first user datum 8 and second user datum 10, are stored and can also be read, for instance by scanner 16. Scanner 16 comprises processor 17 and is connected to server 12, wherein server 12 comprises processor 14. Processor 14 is configured to receive first and second data of identity document 4. Representation 2 of identity document 4 can for instance be realized by taking a photo by means of camera 34 of mobile device 30 (figure 1B) in step 21. After this, first user datum 8 and second user datum 10 can be extracted from the representation by for instance Optical Character Recognition. Alternatively, NFC reader 32 of mobile device 30 can be used to read first user datum 8 and second user datum 10 from chip 6 of identity document 4. In step 20 first user datum 8 and second user datum 10 of identity document 4 can be sent from mobile device 30 to server 12 and processed by processor 14. Processor 14 first stores the date of birth and the document number in memory 15 in hashed form. In step 22 information from the database of profiles is sent to memory 18 of scanner 16. Memory 18 can further be used to store a back-up of an authentication list. Scanner 16 further comprises reading means 19 so that chip 6 of passport 4 can be read.

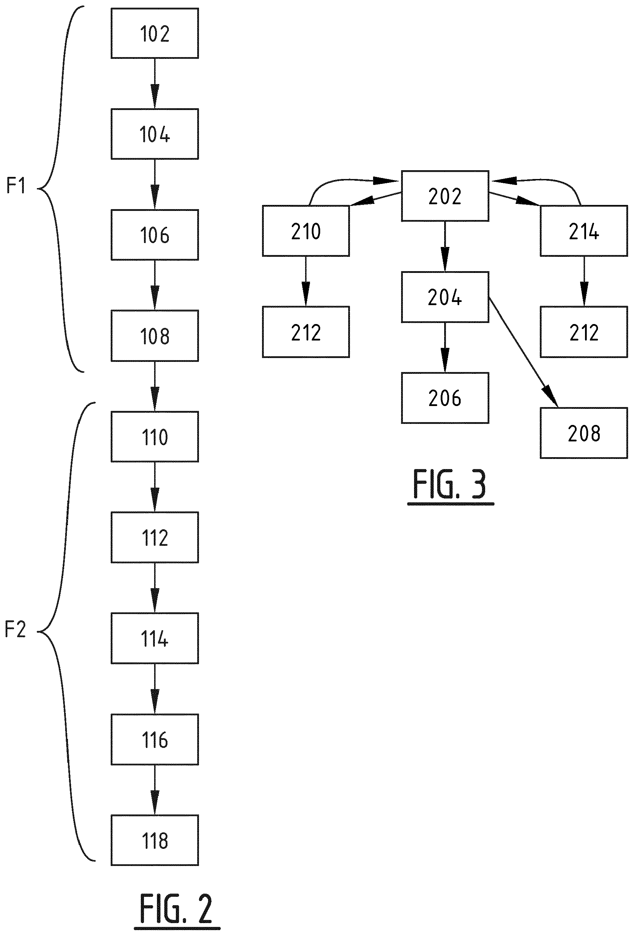

In an example of a method according to the invention a database is provided on server 12 during step 102 (figure 2) in first stage F1. In this example server 12 also comprises a processor 14. In step 104 profile data comprising at least one first user datum of the user is sent to processor 14 of server 12. Processor 14 receives these profile data from a user who enters the profile data in an app on a mobile phone. In this example the profile data comprises the date of birth of the user as first user datum and, additionally, a mobile phone number of the user. The processor then stores these profile data in a profile in the database in step 106. After this, the user purchases an admission ticket to an event in step 108, whereby processor 14 adds a product code to the relevant profile of the user in the database. This product code is the same for anyone purchasing an admission ticket to the event in question. It will be apparent to the skilled person that adding a unique product code is also possible.

In stage F2 processor 14 of server 12 receives representation 2 of identity document 4, in this example a photo of a passport, during step 110. The passport comprises at least the first user datum, in this example the date of birth, and two second user data, in this example the document number and the date of expiration of the passport. In this example the document number is a unique number. In step 112 the date of birth, the document number and the date of expiration are extracted from the representation of the passport by processor 14 of server 12 by means of Optical Character Recognition. During step 114 processor 14 verifies whether the entered first user datum corresponds to the extracted first user datum of the passport. If they correspond, the extracted date of birth, document number and date of expiration, referred to together as identification data, are then in step 116 added by processor 14 to the profile in the database on server 12 associated with the first user datum. In this example the profile data and the identification data are stored in the database in hashed form by processor 14. During step 118 an authentication list is made by processor 14 of server 12 on the basis of the product code of the profiles, wherein the authentication list comprises at least the second user datum of the profiles associated with the product code. A clear list of all profiles that have purchased an admission ticket to the event is hereby obtained in simple manner. This authentication list is for instance stored on server 12 so that it is accessible to processor 17 of scanner 16.

During step 202 (figure 3) of an example of a method according to the invention at least the second user datum is read from chip 6 of the passport by scanner 16. The scanner is for instance disposed at the entrance of an event. In step 210 the authentication list made in step 118 is updated every determined unit of time, for instance every minute. This updating takes place in that processor 17 is connected via an Internet connection to server 12 and thus receives the authentication list. In step 212 a local back-up of the authentication list is made on scanner 16 by processor 17 so that users can still enter the event if the Internet connection is lost. In step 214 processor 14 verifies whether the profiles that are on the authentication list are also on a second list. This second list can for instance be a blacklist of users who have behaved badly at previous events. When a profile on the blacklist corresponds to a profile on the authentication list, the profile in question will be removed from the authentication list by the processor. The user can have the chip of his or her passport read by scanner 16, wherein scanner 16 scans the document number, the date of expiration and the date of birth of the passport from the chip. In step 204 processor 17 of scanner 16 verifies whether the document number, the date of expiration and the date of birth occur in the authentication list. If the document number, the date of expiration and the date of birth correspond to one determined profile on the authentication list, an authentication signal is sent by processor 17 in step 206 so that the user can gain entry to the event. If at least one of the document number, the date of expiration or the date of birth does not occur in the authentication list, a denial signal is sent by processor 17 of scanner 16 in step 208.

The present invention is by no means limited to the above described preferred embodiments thereof. The rights sought are defined by the following claims, within the scope of which many modifications can be envisaged.

## Claims

1. Computer-implemented method for providing an authentication list for authentication of a purchase by a user, comprising a first stage of:
- providing (102) a database on a server (12);
- obtaining (104) profile data from the user comprising at least one first user datum (8) of the user, which is shown on an identity document (4);
- storing (106) the profile data in a profile in the database;
- associating a product code, such as a ticket, with the profile, for instance by the user purchasing the product code
and a second stage of:
- reading the first (8) and second (10) user datum from a chip (6) of the identity document (4);
- receiving (102) a second user datum (10) from the user, wherein the second user datum is shown on the identity document (4), on the server (12), wherein the second user datum (10) comprises a unique identification number; and
- adding (116) the second user datum (10) to the profile associated with the first user datum (8); and
- creating, on the basis of the product code, an authentication of the profiles comprising the product code.

2. Method according to claim 1, wherein the second stage further comprises of:
- verifying (114) whether the second user datum (10) is associated with the first user datum (8) and/or manually entering the second user datum (10) on a mobile device (30).

3. Method according to claim 1 or 2, wherein the second stage further comprises of:
- extracting (112) the first (8) and second user datum (10) from a representation, such as an image, photo or scan, of the identity document (4).

4. Method according to claim 3, wherein the step of verifying takes place prior to the second user datum (10) being added to the profile, and wherein the step of verifying further comprises of:
- verifying whether the first user datum (8) extracted or read from the identity document (4) corresponds to the first user datum (8) obtained from the user.

5. Method according to any one of the foregoing claims, wherein the first user datum comprises at least a date of birth of the user.

6. Method according to any one of the foregoing claims, wherein the associating comprises of associating a unique product code with the relevant profile of the user in the database.

7. Method according to at least one of the foregoing claims, wherein the second user datum (10) comprises at least one of the date of birth, the document number, the date of expiration and/or the citizen service number of the identity document (4), and/or wherein the profile data and the second user data (10) in the database and/or the authentication list are hashed, and/or further comprising of sending an admission signal using a mobile device (30) which is related to the profile when the mobile device (30) is located within a determined distance from the scanner (16).

8. Method according to any one of the foregoing claims, further comprising of:
- using a scanner, reading at least the second user datum from the chip of the identity document;
- verifying whether the read second user datum occurs in the database; and
- sending an authentication signal if the second user datum occurs in the database.

9. Method according to claim 8, further comprising of:
- using the scanner (16), reading the first user datum (8);
- verifying whether the read first user datum (8) corresponds to the first user datum (8) of the profile associated with the second user datum (10) and
- sending a denial signal if the read first user datum (8) does not correspond to the first user datum (8) of the profile associated with the second user datum (10)

10. Method according to claim 8 or 9, wherein a denial signal is sent if the second user datum (10) does not occur in the database.

11. Method according to any one of the claims 8-10further comprising the step of setting the scanner (16) to a predetermined product code and
verifying whether the preset product code is associated with the profile associated with the second user datum (10).

12. Method according to any one of the claims 8-10, wherein the verification comprises of verifying whether the read second user datum (10) occurs in the authentication list, or further comprising of sending the authentication list to the scanner (16) every determined unit of time, or further comprising of storing a local back-up of the authentication list using the scanner (16).

13. Method according to any one of the claims 8-12, wherein the database and/or authentication list is compared to a second list of profiles, and when the profile on the database and/or authentication list corresponds to profiles from the second list, a denial signal is generated, and/or further comprising of:
- adding profiles which are associated with the second user datum (10) and have already been read by the scanner (16) to an attendance register; and
- sending a denial signal if the second user datum (10) read by the scanner (16) occurs in the attendance register.

14. System comprising a server (12) configured to perform the steps according to any one of the claims 1-7, preferably further comprising a scanner (16) configured to carry out any one of the claims 8-13.

## Patentansprüche

1. Computerimplementiertes Verfahren zum Bereitstellen einer Authentifizierungsliste zur Authentifizierung eines Ankaufs von einem Benutzer, umfassend einen ersten Schritt aus:
- Bereitstellen (102) einer Datenbank auf einem Server (12);
- Erhalten (104) von Profildaten von dem Benutzer, die zumindest ein erstes Benutzerdatum (8) des Benutzers umfassen, das auf einem Ausweisdokument (4) gezeigt wird,
- Speichern (106) der Profildaten in einem Profil in der Datenbank;
- Verknüpfen eines Produktcodes, wie eines Tickets, mit dem Profil, beispielsweise indem der Benutzer den Produktcode ankauft,
und einen zweiten Schritt aus:
- Auslesen des ersten (8) und des zweiten (10) Benutzerdatums aus einem Chip (6) des Ausweisdokuments (4);
- Empfangen (102) eines zweiten Benutzerdatums (10) von dem Benutzer, wobei das zweite Benutzerdatum auf dem Ausweisdokument (4) auf dem Server (12) gezeigt wird, wobei das zweite Benutzerdatum (10) eine eindeutige Kennnummer umfasst, und
- Hinzufügen (116) des zweiten Benutzerdatums (10) zu dem Profil, das mit dem ersten Benutzerdatum (8) verknüpft ist, und
- Erstellen, auf der Basis des Produktcodes, einer Authentifizierung der Profile, die den Produktcode umfassen.

2. Verfahren nach Anspruch 1, wobei der zweite Schritt ferner Folgendes umfasst:
- Verifizieren (114), ob das zweite Benutzerdatum (10) mit dem ersten Benutzerdatum (8) verknüpft ist, und/oder manuelles Eingeben des zweiten Benutzerdatums (10) auf einer mobilen Vorrichtung (30).

3. Verfahren nach Anspruch 1 oder 2, wobei der zweite Schritt ferner Folgendes umfasst:
- Extrahieren (112) des ersten (8) und des zweiten Benutzerdatums (10) aus einer Darstellung, wie einem Bild, Foto oder Scan, des Ausweisdokuments (4).

4. Verfahren nach Anspruch 3, wobei der Schritt des Verifizierens stattfindet, bevor das zweite Benutzerdatum (10) dem Profil hinzugefügt wird, und wobei der Schritt des Verifizierens ferner Folgendes umfasst:
- Verifizieren, ob das erste Benutzerdatum (8), das aus dem Ausweisdokument (4) extrahiert oder ausgelesen ist, dem ersten Benutzerdatum (8) entspricht, das von dem Benutzer erhalten wird.

5. Verfahren nach einem der vorhergehenden Ansprüche, wobei das erste Benutzerdatum zumindest ein Geburtsdatum des Benutzers umfasst.

6. Verfahren nach einem der vorhergehenden Ansprüche, wobei das Verknüpfen Verknüpfen eines eindeutigen Produktcodes mit dem relevanten Profil des Benutzers in der Datenbank umfasst.

7. Verfahren nach zumindest einem der vorhergehenden Ansprüche, wobei das zweite Benutzerdatum (10) zumindest eines von dem Geburtsdatum, der Dokumentennummer, dem Ablaufdatum und/oder der Bürgerservicenummer des Ausweisdokuments (4) umfasst, und/oder wobei die Profildaten und die zweiten Benutzerdaten (10) in der Datenbank und/oder der Authentifizierungsliste gehasht sind, und/oder ferner umfassend Senden eines Zulassungssignals unter Verwendung einer mobilen Vorrichtung (30), die sich auf das Profil bezieht, wenn sich die mobile Vorrichtung (30) innerhalb einer bestimmten Entfernung von dem Scanner (16) befindet.

8. Verfahren nach einem der vorhergehenden Ansprüche, ferner umfassend:
- unter Verwendung eines Scanners, Auslesen von zumindest dem zweiten Benutzerdatum aus dem Chip des Ausweisdokuments;
- Verifizieren, ob das ausgelesene zweite Benutzerdatum in der Datenbank vorkommt, und
- Senden eines Authentifizierungssignals, wenn das zweite Benutzerdatum in der Datenbank vorkommt.

9. Verfahren nach Anspruch 8, ferner umfassend:
- unter Verwendung des Scanners (16), Auslesen des ersten Benutzerdatums (8);
- Verifizieren, ob das ausgelesene erste Benutzerdatum (8) dem ersten Benutzerdatum (8) des Profils entspricht, das mit dem zweiten Benutzerdatum (10) verknüpft ist, und
- Senden eines Ablehnungssignals, wenn das ausgelesene erste Benutzerdatum (8) nicht dem ersten Benutzerdatum (8) des Profils entspricht, das mit dem zweiten Benutzerdatum (10) verknüpft ist.

10. Verfahren nach Anspruch 8 oder 9, wobei ein Ablehnungssignal gesendet wird, wenn das zweite Benutzerdatum (10) nicht in der Datenbank vorkommt.

11. Verfahren nach einem der Ansprüche 8-10, ferner umfassend den Schritt des Einstellens des Scanners (16) auf einen vorbestimmten Produktcode und Verifizierens, ob der voreingestellte Produktcode mit dem Profil verknüpft ist, das mit dem zweiten Benutzerdatum (10) verknüpft ist.

12. Verfahren nach einem der Ansprüche 8-10, wobei die Verifizierung Verifizieren umfasst, ob das ausgelesene zweite Benutzerdatum (10) in der Authentifizierungsliste vorkommt, oder
ferner umfassend Senden der Authentifizierungsliste an den Scanner (16) in jeder bestimmten Zeiteinheit, oder ferner umfassend Speichern einer lokalen Sicherung der Authentifizierungsliste unter Verwendung des Scanners (16).

13. Verfahren nach einem der Ansprüche 8-12, wobei die Datenbank und/oder die Authentifizierungsliste mit einer zweiten Liste von Profilen verglichen wird und wenn das Profil in der Datenbank und/oder der Authentifizierungsliste Profilen aus der zweiten Liste entspricht, ein Ablehnungssignal erzeugt wird, und/oder ferner umfassend:
- Hinzufügen von Profilen, die mit dem zweiten Benutzerdatum (10) verknüpft sind und bereits durch den Scanner (16) ausgelesen worden sind, zu einem Anwesenheitsregister; und
- Senden eines Ablehnungssignals, wenn das zweite Benutzerdatum (10), das durch den Scanner (16) ausgelesen wird, in der Anwesenheitsliste vorkommt.

14. System, das einen Server (12) umfasst, der konfiguriert ist, um die Schritte nach einem der Ansprüche 1-7 durchzuführen, bevorzugt ferner umfassend einen Scanner (16), der konfiguriert ist, um einen der Ansprüche 8-13 auszuführen.

## Revendications

1. Procédé mis en oeuvre par ordinateur pour fournir une liste d'authentification pour l'authentification d'un achat par un utilisateur, comprenant une première étape de :
- fourniture (102) d'une base de données sur un serveur (12) ;
- obtention (104) de données de profil auprès de l'utilisateur comprenant au moins une première donnée utilisateur (8) de l'utilisateur, qui est représentée sur un document d'identité (4) ;
- stockage (106) des données de profil dans un profil dans la base de données ;
- association d'un code produit, tel qu'un ticket, au profil, par exemple par l'utilisateur achetant le code produit
et une seconde étape de :
- lecture des première (8) et seconde (10) données utilisateur à partir d'une puce (6) du document d'identité (4) ;
- réception (102) d'une seconde donnée utilisateur (10) de l'utilisateur, dans lequel la seconde donnée utilisateur est affichée sur le document d'identité (4), sur le serveur (12), dans lequel la seconde donnée utilisateur (10) comprend un numéro d'identification unique ; et
- ajout (116) de la seconde donnée utilisateur (10) au profil associé à la première donnée utilisateur (8) ; et
- création, sur la base du code produit, d'une authentification des profils comprenant le code produit.

2. Procédé selon la revendication 1, dans lequel la seconde étape comprend en outre :
- la vérification (114) si la seconde donnée utilisateur (10) est associée à la première donnée utilisateur (8) et/ou la saisie manuelle de la seconde donnée utilisateur (10) sur un dispositif mobile (30).

3. Procédé selon la revendication 1 ou 2, dans lequel la seconde étape comprend en outre :
- l'extraction (112) de la première (8) et la seconde donnée utilisateur (10) à partir d'une représentation, telle qu'une image, une photo ou un scan, du document d'identité (4).

4. Procédé selon la revendication 3, dans lequel l'étape de vérification a lieu avant que la seconde donnée utilisateur (10) ne soit ajoutée au profil, et dans lequel l'étape de vérification comprend en outre :
- la vérification si la première donnée utilisateur (8) extraite ou lue à partir du document d'identité (4) correspond à la première donnée utilisateur (8) obtenue auprès de l'utilisateur.

5. Procédé selon l'une quelconque des revendications précédentes, dans lequel la première donnée utilisateur comprend au moins une date de naissance de l'utilisateur.

6. Procédé selon l'une quelconque des revendications précédentes, dans lequel l'association comprend l'association d'un code produit unique au profil pertinent de l'utilisateur dans la base de données.

7. Procédé selon au moins l'une des revendications précédentes, dans lequel la seconde donnée utilisateur (10) comprend au moins l'un parmi la date de naissance, le numéro du document, la date d'expiration et/ou le numéro de service citoyen du document d'identité (4), et/ou dans lequel les données de profil et les secondes données d'utilisateur (10) dans la base de données et/ou la liste d'authentification sont hachées, et/ou comprenant en outre l'envoi d'un signal d'admission à l'aide d'un dispositif mobile (30) qui est associé au profil lorsque le dispositif mobile (30) se trouve à une distance déterminée du scanner (16).

8. Procédé selon l'une quelconque des revendications précédentes, comprenant en outre :
- à l'aide d'un scanner, la lecture d'au moins la seconde donnée utilisateur à partir de la puce du document d'identité ;
- la vérification si la seconde donnée utilisateur lue apparaît dans la base de données ; et
- l'envoi d'un signal d'authentification si la seconde donnée utilisateur apparaît dans la base de données.

9. Procédé selon la revendication 8, comprenant en outre :
- à l'aide du scanner (16), la lecture de la première donnée utilisateur (8) ;
- la vérification si la première donnée utilisateur (8) lue correspond à la première donnée utilisateur (8) du profil associé à la seconde donnée utilisateur (10) et
- l'envoi d'un signal de refus si la première donnée utilisateur (8) lue ne correspond pas à la première donnée utilisateur (8) du profil associé à la seconde donnée utilisateur (10).

10. Procédé selon la revendication 8 ou 9, dans lequel un signal de refus est envoyé si la seconde donnée utilisateur (10) n'apparaît pas dans la base de données.

11. Procédé selon l'une quelconque des revendications 8 à 10, comprenant en outre l'étape de réglage du scanner (16) sur un code produit prédéterminé et vérification si le code produit prédéfini est associé au profil associé à la seconde donnée utilisateur (10).

12. Procédé selon l'une quelconque des revendications 8 à 10, dans lequel la vérification comprend la vérification si la seconde donnée utilisateur (10) lue apparaît dans la liste d'authentification, ou
comprenant en outre l'envoi de la liste d'authentification au scanner (16) chaque unité de temps déterminée, ou comprenant en outre le stockage d'une sauvegarde locale de la liste d'authentification à l'aide du scanner (16).

13. Procédé selon l'une quelconque des revendications 8 à 12, dans lequel la base de données et/ou la liste d'authentification est comparée à une seconde liste de profils, et lorsque le profil sur la base de données et/ou la liste d'authentification correspond aux profils de la seconde liste, un signal de refus est généré, et/ou comprenant en outre :
- l'ajout des profils qui sont associés à la seconde donnée utilisateur (10) et ont déjà été lus par le scanner (16) à un registre de présence ; et
- l'envoi d'un signal de refus si la seconde donnée utilisateur (10) lue par le scanner (16) apparaît dans le registre de présence.

14. Système comprenant un serveur (12) configuré pour exécuter les étapes selon l'une quelconque des revendications 1 à 7, comprenant de préférence en outre un scanner (16) configuré pour exécuter l'une quelconque des revendications 8 à 13.
